# EUROPEAN PATENT APPLICATION

(11) **EP 4 840 688 A1**
(43) Date of publication of application: **18.11.2026**
(21) Application number: 26176683.6
(22) Date of filing: 05.05.2026
(51) Int. Cl.: B60M 1/28, B61L 27/53

(54) **RAILWAY POWER LINE MONITORING DEVICE**

(30) Priority: 13.05.2025 IT 202500010760
(71) Applicant: Rete Ferroviaria Italiana S.p.A., 00161 Roma (IT)
(72) Inventor: DE VITA, Giovanniluca, 00161 Roma (IT)
(74) Representative: Fiume, Orazio

(57) **Abstract**

Device (D) for monitoring a railway power supply line, wherein the power supply line comprises a contact wire and a plurality of support elements of the contact wire, the device comprising a first module (PZ1) and a second module (PZ2) and a local source (PMU) of electrical energy, wherein the first module comprises a microcontroller (MCU), a first accelerometer (ACCULP) with relatively low energy consumption and relatively low sensitivity and the second module comprises a second accelerometer (ACCHP) with relatively high energy consumption and relatively high sensitivity, and wherein the first module is directly connected to said source (PMU) and the second module is connected to the source (PMU) through said first module, and wherein the microcontroller is configured to power said second module in response to a first signal generated by said first accelerometer and consequently to receive as input a second signal generated by said second accelerometer and to calculate a characteristic parameter of the contact wire as a function of said second signal.

## Description

### Field of application of the invention

The present invention relates to the field of devices for monitoring railway power supply lines.

### State of the art

The railway power supply line consists of a catenary supported by a plurality of supports along the railway line and has the task of supplying power to a locomotive by means of its pantograph.

The electric wire defining the catenary is suspended at a predefined height by means of a complex system of rigid and elastic structures.

The physical contact between the electric wire and the pantograph allows the transfer of energy to the locomotive in every operating condition of the train.

The supports comprise a system of elements having the purpose of supporting the messenger wire, which in turn supports the contact wire through droppers.

The system of elements comprises poles, brackets, arms, electrical insulators, etc.

The tensioning of the electric wire and the sizing of said elements are carried out in such a way as to guarantee a predetermined response of the wire during the passage of trains, in order to ensure continuous contact with the pantograph.

The contact wire is subject to wear due both to the continuous friction of the pantographs and due to the formation of electric arcs that can be generated when electrical continuity is temporarily interrupted.

Devices are known which are temporarily positioned along sections of the railway line to evaluate the degree of wear of the contact wire.

Such devices are used during measurement campaigns and are then removed in order to be used on another section of railway line subject to a measurement campaign.

Such known devices are invasive and energy-consuming, so much so that they must be powered, during use, by the electrical distribution network generally referred to by the Anglo-Saxon term "grid".

Unless specifically excluded in the detailed description which follows, what is described in this chapter is to be considered as an integral part of the detailed description.

### Summary of the invention

The purpose of the present invention is to present a device for measuring the wear of the contact wire different from those known.

A further purpose of the invention is to present a device for measuring the wear of the contact wire stably associated therewith which does not require power from an external source.

The basic idea of the present invention is to perform measurements of the wear of a contact wire by means of an accelerometer to be associated with a support element of the contact wire.

The monitoring device comprises a first module and a second module and a local source of electrical energy. The first module comprises a microcontroller, a first accelerometer with relatively low energy consumption and relatively low sensitivity and the second module comprises a second accelerometer with relatively high energy consumption and relatively high sensitivity. While the first module is directly connected to said source, the second module is connected to the source through the first module, and the microcontroller is configured to power the second module in response to a first signal generated by the first accelerometer and consequently to receive as input a second signal generated by the second accelerometer and to calculate a characteristic parameter of the contact wire as a function of said second signal.

Thanks to this solution, the device can be stably powered by a local and limited power source, such as a photovoltaic source or an energy harvesting source.

Furthermore, the signals generated by the precision accelerometer are pre-processed on board the device so as to reduce the amount of data transmitted by means of the radio module.

A plurality of devices is permanently arranged along a railway section and according to a first operating configuration, each device is configured to transmit the result of the analyses carried out to a remote server, directly or by means of a gateway.

The microcontroller is configured to acquire the signal generated by the precision accelerometer and to store it in a memory. Furthermore, the microprocessor, after having processed the signal acquired from the accelerometer, stores the result of the frequency analysis without deleting the signal acquired from the accelerometer, so as to be able to provide it upon request to the remote server or to the gateway.

The microprocessor is therefore configured to manage power saving functionalities, perform frequency analysis on the signal generated by the precision accelerometer, transmit the results of the analysis, perform checks on the functionalities of the device itself and on the state of charge of the local source.

The dependent claims describe preferred variants of the invention, forming an integral part of the present description.

### Brief description of the figures

Further purposes and advantages of the present invention will become clear from the detailed description which follows of an embodiment thereof (and of its variants) and from the appended drawings given by way of non-limiting example, in which:

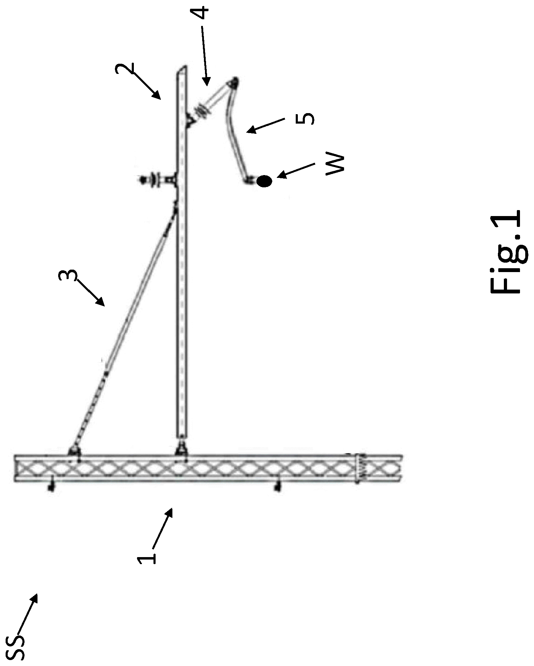

- figure 1 shows a suspension system of an electric contact wire for supplying electrical power to a railway line;
- figure 2 shows a monitoring device according to the present invention;

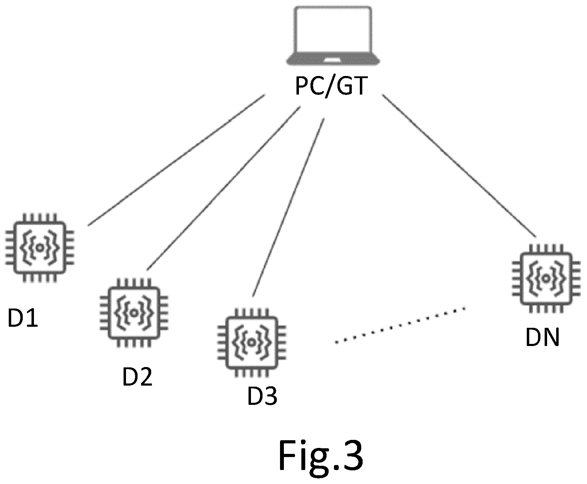

- figure 3 shows a monitoring system comprising two or more of the devices of figure 2;

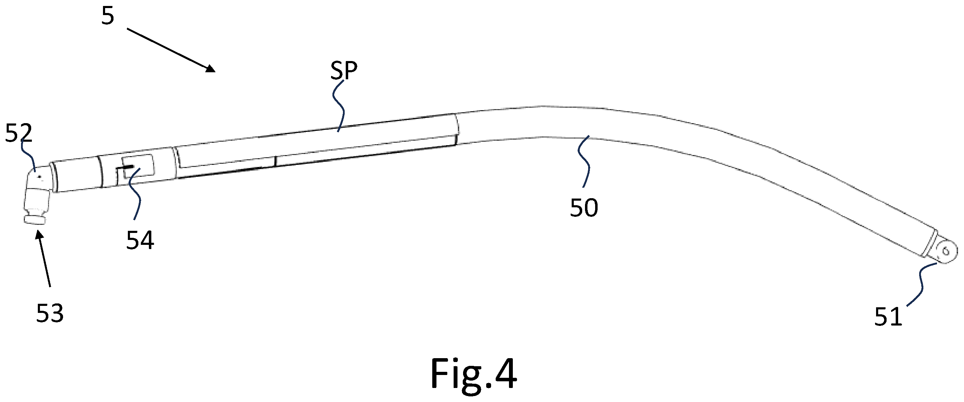

- figure 4 shows an element of the suspension system of figure 1, modified according to the present invention;

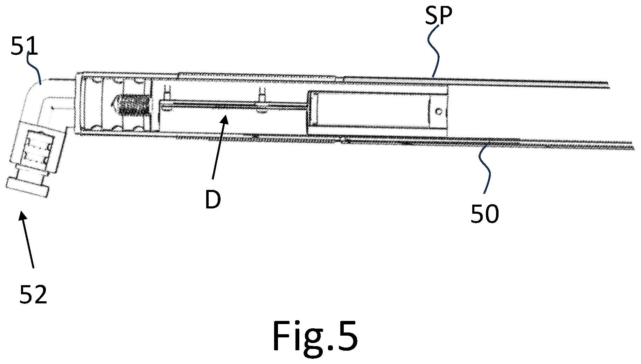

- figure 5 shows a longitudinal section of a portion of the element of figure 4.

The same reference numbers and letters in the figures identify the same elements or components or functions.

It should also be noted that the terms "first", "second", "third", "upper", "lower" and the like may be used here to distinguish various elements. These terms do not imply a spatial, sequential or hierarchical order for the modified elements unless specifically indicated or deducible from the text.

The elements and features illustrated in the different preferred embodiments, including the drawings, can be combined with each other without thereby departing from the scope of protection of the present application as described below.

### Detailed description of embodiments

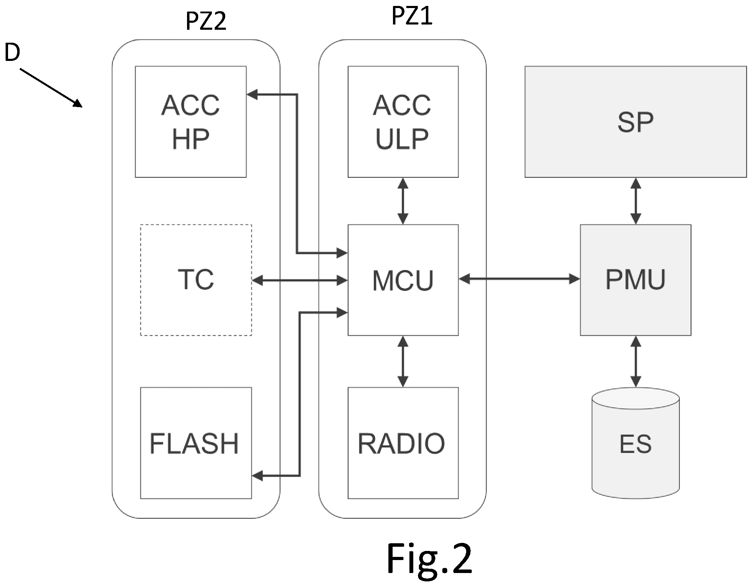

The figure shows a suspension system SS of a contact wire W for supplying electrical power to a railway line, the suspension system comprising a pole or vertical support 1, a bracket 2, a tie rod 3 adjustable in length, a polygonation arm 4, and a polygonation tie rod 5, wherein the contact wire W intended to supply the locomotive of a train is fixed to the polygonation tie rod 5 by means of a clamp not shown; with reference to figure 2, an example is shown of a device D for monitoring a railway power supply line, wherein the power supply line comprises said contact wire W and a plurality of support elements 1-5 of the contact wire, the device D comprising a first module PZ1 and a second module PZ2 and a local source PMU of electrical energy, wherein the first module comprises a microcontroller MCU and a first accelerometer ACCULP with relatively low energy consumption and relatively low sensitivity and the second module comprises a second accelerometer ACCHP with relatively high energy consumption and relatively high sensitivity, wherein the first module PZ1 is directly connected to the source PMU and the second module PZ2 is connected to the source PMU through the first module, and wherein the microcontroller is configured to power the second module in response to a first signal generated by said first accelerometer and consequently to receive as input a second signal generated by the second accelerometer and to calculate a characteristic parameter of the contact wire as a function of said second signal, wherein the second module is activated and therefore powered only when necessary, that is when the first accelerometer detects the arrival of a train, wherein in the present description the term "module" means a hardware module that can include firmware, such that the microcontroller comprises an internal memory in which firmware is stored that allows it to perform the functionalities described herein, while the second module comprises a flash memory FLASH dedicated to storing raw and/or processed data and does not necessarily include firmware, although the precision accelerometer may be provided with self-calibration means configured to execute a program contained in firmware stored in a memory of the accelerometer itself, wherein the second accelerometer is defined as having relatively high energy consumption and relatively high sensitivity in comparison with the first accelerometer which has relatively low sensitivity and relatively low energy consumption, such that the first accelerometer has lower sensitivity and lower energy consumption than the second accelerometer, and wherein the first accelerometer is preferably AIS2IH by STMicroelectronics, characterized by consumption of 0.65 µA and noise density of 90 µg/√Hz, and the second accelerometer is preferably ADXL355 by Analog Devices, characterized by consumption of 200 µA and noise density of 22.5 µg/√Hz, wherein the use of the first accelerometer as a trigger for activation of the second accelerometer allows a significant reduction in energy consumption and enables power supply by a local source such as a photovoltaic module or an energy harvesting device, wherein the microcontroller is of a very low consumption type and, in experiments, a microcontroller of the STM32L4 series by STMicroelectronics was used, capable of providing 100 DMIPS at 80 MHz, the architecture allowing dynamic voltage scaling to balance energy consumption with processing demand and including low-power peripherals available in sleep mode with a wake-up time of about 5 µs compatible with detection of an approaching train, wherein the microcontroller comprises a high-speed internal memory and an external memory controller for static memories and wherein preferably the second module PZ2 includes a static flash memory FH, wherein the microprocessor further comprises communication interfaces including four I2C interfaces, three SPI interfaces, three USART interfaces, two standard UART interfaces and one low-power UART, two SAI, one SDMMC, two CAN, one USB OTG full-speed, one SWPMI master interface, and a DMA2D controller, wherein firmware stored in the internal memory enables calculation of said parameter, in particular calculation of a natural frequency of oscillation of the contact wire following a excitation caused by passage of a train, and wherein the microprocessor is configured to calculate a value of a section of the contact wire as a function of said natural frequency of oscillation, wherein the wireless communication interface RADIO is preferably associated with the first module PZ1 so that the device can be awakened from a sleep condition in which the second module is completely unpowered, wherein the wireless communication interface is configured to operate in infrastructure mode and the microprocessor is configured to transmit the value of the section of the contact wire to a server PC or gateway GT at a predetermined time or upon request by means of said interface, wherein the second module comprises the flash memory for storing raw data measured by the second accelerometer during at least one passage of a train and at least the calculated value of the section of the contact wire, wherein according to a preferred variant the second module comprises an interface TC to a sensor for measuring the temperature of the contact wire, preferably a thermocouple whose terminals are connected to the interface TC configured to correct non-linearity of the thermocouple, provide input protection, detect and correct cold junction compensation, include a digital controller and an interface compatible with the communication interfaces of the microcontroller, wherein the microprocessor, when the thermocouple is present, is configured to calculate the value of the section of the contact wire also as a function of the temperature, wherein the local electrical energy source PMU comprises a battery ES or a supercapacitor and at least one photovoltaic module SP associated with a casing of the device D, the casing having a tubular shape with an approximately circular section and the photovoltaic module being applied to the casing so as to adhere to the tubular shape and being flexible and preferably of monocrystalline technology, wherein the device may have a casing distinct from a support element and fastening means for fixing it thereto but is preferably integrated into a support element, and wherein a support element 5 of a contact wire comprises a tubular body 50 defining an internal cavity in which the device D is housed so that the support element defines the casing of the device, and preferably the support element is a polygonation tie rod which is closest to the contact wire so as to maximize measurement of displacement thereof, the polygonation tie rod having an arched shape with a first end 51 for hinging to the polygonation arm 4 and a second end 52 comprising an anchoring button 53 of the contact wire, the device being housed in a position proximal to said anchoring button, wherein antennas 54 are provided in printed form on a flexible adhesive support and operatively connected to the wireless communication interface and are preferably arranged on lateral faces of the body so as to face antennas of another device, wherein a plurality of devices D may be distributed along a railway section to perform measurements of the section of the contact wire along the section, and wherein the devices can communicate directly with a gateway or server in a structured configuration and the microprocessor is configured to attempt connection to another device in case of connection loss so as to implement an ad hoc configuration using another device as an intermediate gateway, and wherein variants of the described embodiment are possible without departing from the scope of protection of the invention and the person skilled in the art is able to implement the subject-matter of the invention without introducing further construction details.

## Claims

1. Railway power line monitoring device, wherein the power supply line comprises a contact wire and a plurality of support elements of the contact wire, the device comprising a first module (PZ1) and a second module (PZ2) and a local source (PMU) of electrical energy, wherein the first module comprises a microcontroller (MCU), a first accelerometer (ACCULP) and the second module comprises a second accelerometer (ACCHP), wherein the first accelerometer has a lower energy consumption and a lower sensitivity than the second accelerometer, and wherein the first module is directly connected with said source (PMU) and the second module is connected to the source (PMU) through said first module, and wherein the microcontroller is configured to power said second module in response to a first signal generated by said first accelerometer and consequently to receive as input a second signal generated by said second accelerometer and to calculate a characteristic parameter of the contact wire as a function of said second signal..

2. Device according to claim 1, wherein said parameter comprises a natural frequency of oscillation of the contact wire following a excitation caused by the passage of a train.

3. Device according to claim 2, wherein said microprocessor is configured to calculate a value of a section of the contact wire as a function of said natural frequency of oscillation.

4. Device according to any one of the preceding claims 1-3, wherein said first module further comprises a wireless communication interface (RADIO), configured to operate in infrastructure mode, operatively connected with the microprocessor, and wherein the microprocessor is configured to transmit said value to a server (PC) or gateway (GT) at a predetermined moment and/or upon request of the server (PC) or gateway (GT), by means of said wireless communication interface.

5. Device according to any one of the preceding claims, wherein said second module comprises a memory for storing said second signal and said calculated value of the section of the contact wire.

6. Device according to any one of the preceding claims, wherein said second module comprises an interface (TC) to an external temperature sensor for measuring a temperature value of the contact wire and wherein said microprocessor is configured to calculate said value of the section of the contact wire further as a function of said temperature value.

7. Device according to any one of the preceding claims, wherein said local source (PMU) of electrical energy comprises a battery (ES) and at least one photovoltaic module (SP) associated with a casing of the device (D).

8. Device according to claim 7, wherein said casing has a tubular shape with an approximately circular section and wherein said photovoltaic module is applied to said casing adhering to said tubular shape.

9. Support element (5) of a contact wire of a railway power supply line, having a body (50) of tubular shape defining an internal cavity in which a monitoring device (D) according to any one of the preceding claims 1-8 is housed.

10. Support element according to claim 9, defining said casing according to claim 7 or 8.

11. Support element according to claim 10, defining a polygonation tie rod.

12. Support element according to claim 11, wherein the polygonation tie rod has an arched shape with a first end (51) intended to be hinged to another support element (4) and a second end (52), opposite to the first end, comprising an anchoring button (53) of the contact wire, and wherein said device (D) is housed in a position proximal to said anchoring button.
